Europäisches Patentamt

(19) European Patent Office

Office européen des brevets

(11) Numéro de publication: **0 164 279**
**A1**

## (12) DEMANDE DE BREVET EUROPEEN

(21) Numéro de dépôt: **85400742.4**

(22) Date de dépôt: **16.04.85**

(51) Int. Cl.⁴: **B 63 H 9/02,** B 63 H 16/18

(30) Priorité: **17.04.84 FR 8406616**

(43) Date de publication de la demande: **11.12.85**
**Bulletin 85/50**

(84) Etats contractants désignés: **AT BE CH DE GB IT LI LU NL SE**

(71) Demandeur: **Ets L. BONMORT et Cie Société Anonyme, Bonneuil de Verrines, F-79370 Celles-Sur-Belle (FR)**

(72) Inventeur: **Bonmort, André, Bonneuil de Verrines, F-79370 Celles-sur-Belle (FR)**

(74) Mandataire: **Boivin, Claude, 9, rue Edouard-Charton, F-78000 Versailles (FR)**

(54) **Engin nautique ou terrestre.**

(57) Engin nautique ou terrestre dans lequel un élément de propulsion est constitué par un volume de révolution mobile en rotation autour d'un axe vertical.

L'arbre d'entraînement (28) de l'élément de propulsion (7) est relié par un embrayage (29) à un arbre intermédiaire (18) qui est lui-même relié d'une part à une hélice (19) ou à des roues, et d'autre part à un pédalier (13) ou à des organes d'entraînement manuels.

- 1 -

Lorsqu'on fait tourner un volume de révolution d'axe vertical dans un courant d'air, ce volume est soumis à une force qui est perpendiculaire à la direction du courant d'air. Cet effet est connu sous le nom d'effet Fletner.

La présente invention a pour objet un engin nautique ou terrestre qui fait application de l'effet Fletner.

Cet engin, dans lequel un élément de propulsion est constitué par un volume de révolution mobile en rotation autour d'un axe vertical, est caractérisé en ce que l'arbre d'entraînement de l'élément de propulsion est relié par un embrayage à un arbre intermédiaire qui est lui-même relié d'une part à une hélice ou des roues, et d'autre part à un pédalier ou à des organes d'entraînement manuels.

A l'aide du pédalier ou des organes d'entraînement manuels l'utilisateur peut faire tourner l'hélice ou les roues et assurer le déplacement de l'engin de la manière usuelle; ce sera le cas, par exemple, dans le cas d'un engin nautique, pour s'éloigner du rivage ou en l'absence de vent.

Mais l'utilisateur peut également, en enclenchant l'embrayage, faire tourner l'élément de propulsion. L'engin se déplace alors et son mouvement par rapport à l'eau ou au sol fait tourner l'hélice ou les roues. Celle-ci entraîne à son tour l'élément de propulsion de sorte que l'utilisateur peut cesser d'agir sur le pédalier.

Dans un mode de réalisation avantageux d'un engin nautique le pédalier ou les organes d'entraînement manuels sont reliés par une première roue libre à l'arbre intermédiaire et l'hélice est reliée à cet arbre intermédiaire par une seconde roue libre et un inverseur.

Dans ces conditions l'utilisateur peut faire tourner aussi bien l'hélice que l'élément de propulsion, en actionnant dans le même sens le pédalier ou les organes d'entraînement manuels, mais en inversant le sens de la liaison entre l'hélice et l'arbre intermédiaire. Quand ce dernier est entraîné par l'hélice, le pédalier ou les organes d'entraînement manuels ne le sont pas grâce à la présence de la roue libre. En variante, l'inverseur pourrait être interposé entre l'arbre intermédiaire et le pédalier ou les moyens d'entraînement manuels.

Le rapport de transmission entre l'hélice et l'élément de propulsion et celui entre le pédalier et les organes d'entraînement manuels doivent être déterminés, compte-tenu des dimensions de l'élément de propulsion, de manière que la vitesse périphérique soit supérieure à la vitesse du vent dans le cas d'une faible brise. L'expérience montre que l'effort d'entraînement exercé sur l'engin à l'aide d'un élément de propulsion de surface apparente s est trois à quatre fois plus grand que celui obtenu avec une voile de surface S.

On a décrit ci-après, à titre d'exemple non limitatif, un mode de réalisation de l'engin nautique selon l'invention, avec référence au dessin annexé dans lequel :

- 3 -

0164279

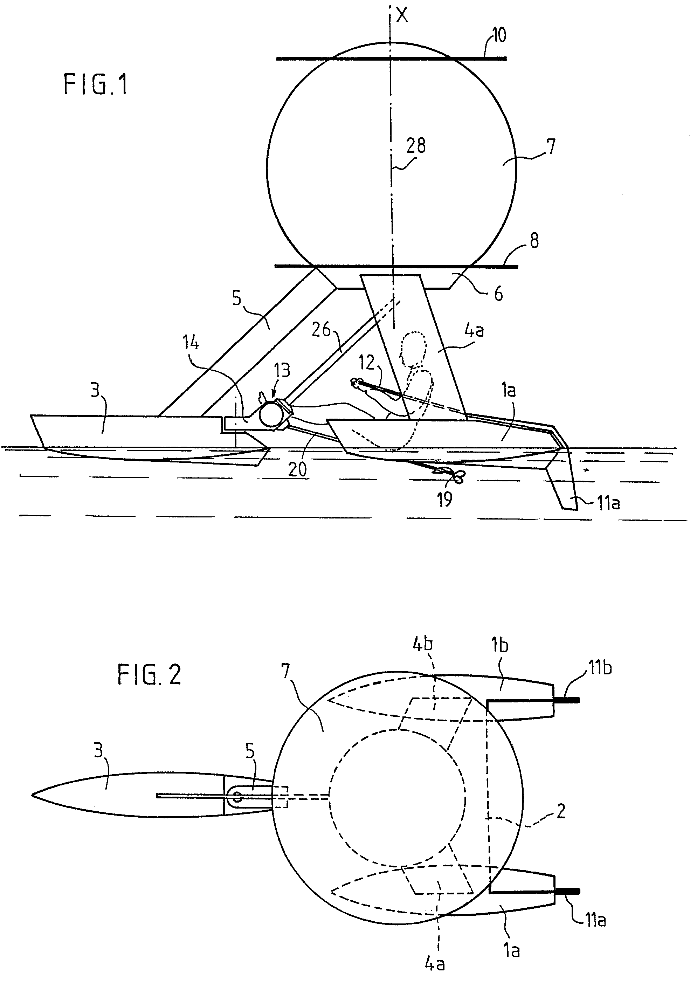

La Figure 1 est une vue en élévation de l'engin;

La Figure 2 en est une vue en plan;

Les Figures 3 à 5 montrent schématiquement la liaison entre l'élément de propulsion, l'hélice et le pédalier;

La Figure 6 est un schéma montrant l'effort exercé par l'élément de propulsion sur l'engin, en fonction du vent.

Tel qu'il est représenté au dessin, l'engin nautique comporte deux flotteurs latéraux 1a et 1b réunis l'un à l'autre par une plate-forme 2, et un flotteur avant 3. Les flotteurs sont réunis par trois bras 4a, 4b et 5 à un élément de support 6 disposé au-dessus de la plate-forme 2. Un élément d'entraînement qui pourrait être un cylindre d'axe vertical mais qui, dans l'exemple représenté est constitué par une sphère tronquée 7 délimitée à sa partie inférieure par une plaque circulaire horizontale 8, est montée à rotation par rapport au support 6 autour de son diamètre vertical X-X. La sphère porte un disque horizontal 10, de même diamètre que la plaque 8, à une faible distance de son extrémité supérieure.

A l'arrière de chaque flotteur 1a et 1b est prévu un gouvernail 11a ou 11b, les deux gouvernails pouvant être commandés par une même barre 12.

Un pédalier 13 est monté à rotation par rapport à un carter 14 porté par le flotteur avant 3. L'axe de ce pédalier est relié par une chaîne 15 et une roue libre 16 à un arbre intermédiaire d'entraînement 17, la manoeuvre du pédalier faisant tourner l'arbre dans le sens de la flèche 18. La roue libre 16 est disposée de manière que le pédalier entraîne l'arbre mais que la rotation de l'arbre dans le sens de la flèche 18 n'entraîne pas le pédalier.

Une hélice 19 est fixée à un arbre 20 qui est monté à ro-

0164279

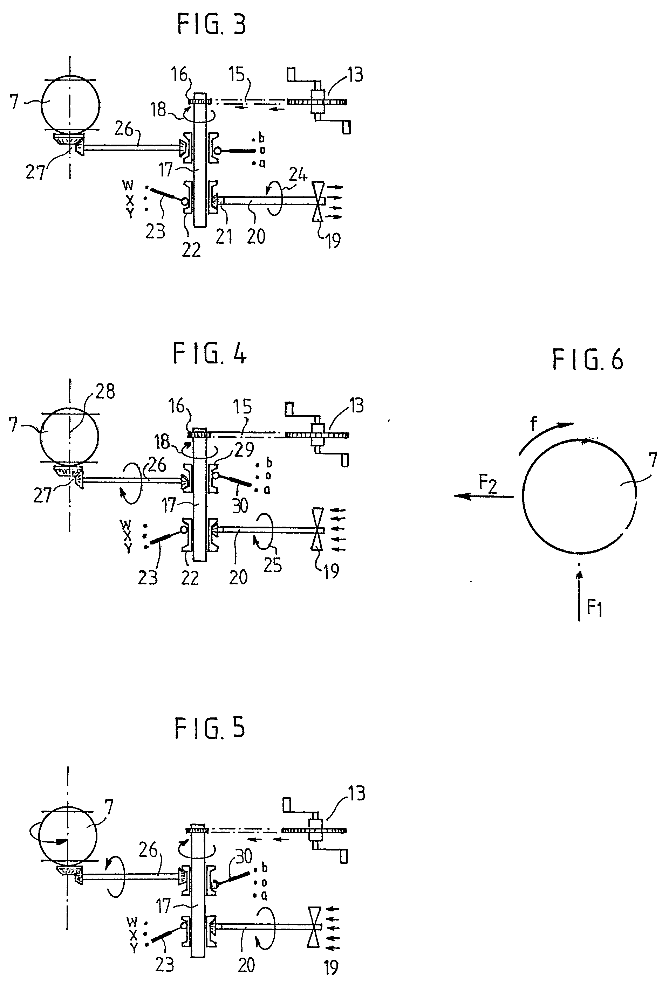

tation dans des paliers portés par la plate-forme 2. Cet arbre 20 est relié par une roue libre 21 et un embrayage inverseur 22 à l'arbre 17. Le levier 23 permet de manoeuvrer l'embrayage. Lorsque le levier 23 est dans la position "W" comme à la Figure 3, l'arbre 17 tournant dans le sens de la flèche 18 entraîne l'hélice 19 dans le sens de la flèche 24, dans lequel l'hélice assure le déplacement de l'engin. La roue libre 21 est disposée de façon que la rotation de l'hélice dans le sens de la flèche 24 soit sans effet sur l'arbre 17, lorsque le levier 23 est dans la position "W". En revanche, lorsque le levier 23 est dans la position "Y" (Figures 4 et 5), la rotation de l'hélice dans le sens de la flèche 25, opposé à celui de la flèche 24, entraîne l'arbre 17 dans le sens de la flèche 18. Lorsque le levier 23 est dans la position "x", les deux arbres 17 et 20 sont désolidarisés l'un de l'autre.

L'une des extrémités d'un arbre 26 est reliée par un renvoi conique 27 à l'arbre vertical d'entraînement 28 de la sphère 7. L'autre extrémité de l'arbre 26 est reliée à l'arbre 17 par un embrayage inverseur 29 commandé par un levier 30.

Pour s'éloigner du rivage en l'absence de vent, l'utilisateur met le levier 23 dans la position "W" et le levier 30 dans la position "0" dans laquelle les deux arbres 17 et 26 sont désolidarisés l'un de l'autre. La manoeuvre du pédalier 13 fait tourner l'hélice dans le sens de la flèche 24 et est sans effet sur la sphère 7.

Lorsque l'utilisateur s'est éloigné du rivage et qu'il y a du vent, il amène le levier 23 dans la position "Y" et le levier 30 dans la position "a" (Figure 4) ou "b" (Figure 5) suivant la direction du vent et celle dans laquelle il veut aller. Si, par exemple, le vent a la direction $F_1$ et qu'il veuille aller dans la direction $F_2$ ou dans une direction comportant la composante $F_2$, il manoeuvrera le levier 30 de façon à faire tourner la sphè-

0164279

re 7 dans le sens de la flèche f (voir Figure 6).

Puis l'utilisateur manoeuvre le pédalier 13 de façon à entraîner la sphère 7, ce qui assure la propulsion de l'engin. L'hélice 19 se met à tourner dans le sens de la flèche 25 par suite du déplacement de l'eau par rapport à l'engin, mais sans être entraîné par l'arbre 17, étant donné la présence de la roue libre 21.

Puis quand la vitesse de rotation de l'arbre 20 ayant augmenté correspond à celle de l'arbre 17, l'hélice entraîne ce dernier arbre en rotation. A partir de ce moment, l'utilisateur peut cesser d'agir sur le pédalier 13. Le mouvement de l'engin fait tourner l'hélice 19 qui entraîne la sphère 7 en rotation, cette sphère assurant à son tour le maintien du mouvement et même l'augmentation de sa vitesse.

Si l'utilisateur veut changer de direction, il manoeuvre la barre 12 et éventuellement le levier 30 de façon à inverser le sens de rotation de la sphère 7.

Revendications
_____

1. Engin nautique ou terrestre dans lequel un élément de propulsion est constitué par un volume de révolution mobile en rotation autour d'un axe vertical, caractérisé en ce que l'arbre d'entraînement (28) de l'élément de propulsion (7) est relié par un embrayage (29) à un arbre intermédiaire (18) qui est lui-même relié d'une part à une hélice (19) ou à des roues, et d'autre part à un pédalier (13) ou à des organes d'entraînement manuels.

2. Engin nautique selon la revendication 1, caractérisé en ce que le pédalier (13) ou les organes d'entraînement manuels sont reliés par une première roue libre (16) à l'arbre intermédiaire (17) et en ce que l'hélice (19) est reliée à cet arbre intermédiaire (17) par une seconde roue libre (21) et un inverseur (22).

3. Engin nautique selon la revendication 1, caractérisé en ce que le pédalier (13) ou les organes d'entraînement intermédiaires sont reliés à l'arbre intermédiaire (17) par une première roue libre et un inverseur et en ce que l'hélice (19) est reliée à cet arbre intermédiaire par une seconde roue libre.

4. Engin nautique selon la revendication 2 ou 3, caractérisé en ce que l'inverseur (22) est un embrayage inverseur.

5. Engin nautique ou terrestre selon l'une des revendications précédentes, caractérisé en ce que l'embrayage (29) est un embrayage inverseur.

0164279

1 / 2

FIG.1

FIG. 2

## FIG. 3

## FIG. 4

## FIG. 6

## FIG. 5

Office européen
des brevets

**RAPPORT DE RECHERCHE EUROPEENNE**

0164279

Numero de la demande

EP 85 40 0742

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-A-2 540 167 (ANGELIS) | | B 63 H 9/02<br>B 63 H 16/18 |
| A | DE-C- 422 057 (KIWULL) | | |
| A | US-A-4 349 340 (HOFFMANN) | | |

---

DOMAINES TECHNIQUES
RECHERCHES (Int. Cl.4)

B 63 H

Le présent rapport de recherche a été établi pour toutes les revendications

| Lieu de la recherche | Date d'achèvement de la recherche | Examinateur |
|---|---|---|
| LA HAYE | 28-05-1985 | BRUMER A.M. |